# EUROPEAN PATENT APPLICATION

(11) **EP 2 557 311 A1**
(43) Date of publication of application: **13.02.2013**
(21) Application number: 11177407.1
(22) Date of filing: 12.08.2011
(51) Int. Cl.: F03D 7/04, F03D 9/00

(54) **A method for controlling a wind power park and a wind power park controlled by such method**

(71) Applicant: kk-electronic a/s, 7430 Ikast (DK)
(72) Inventor: Odgaard, Peter Fogh, 8382 Hinnerup (DK); Thøgersen, Paul Bach, 9220 Aalborg Øst (DK)
(74) Representative: Carlsen, Bjarne

(57) **Abstract**

A method for controlling a wind power park is disclosed, comprising the steps of: collecting information relating to meteorological conditions at the location of the wind power park, estimating for each of a plurality of the wind turbines the production costs per unit energy at different load levels of the respective wind turbine, collecting information from a utility grid operator relating to energy prices and possible requirements relating to the amount of power delivered from the wind power park to the utility grid, controlling the wind power park by deciding on a total amount of power to be delivered from the wind power park and distributing the decided power production between individual wind turbines, and repeating the above steps in order to obtain a dynamic control of the wind power park. Further, a wind power park being controlled by such method is disclosed.

## Description

### Field of the invention

The present invention relates to a method for controlling a wind power park, which comprises a plurality of wind turbines and is connected to a utility grid.

### Background of the invention

During recent years, the worldwide number of wind turbines producing electric power has grown considerably.

Typically, a plurality of electricity producing wind turbines are assembled in a so-called wind power park, the wind power park being connected to a utility grid through a common connection rather than the individual wind turbines being connected directly to the utility grid one by one.

Also, during recent years, the view on such wind power plants have changed from considering them merely as negative loads on the utility grids to considering them as power plants contributing actively to the stability of the utility grids. This development has entailed a large amount of restrictions and requirements to be fulfilled by the wind power parks connected to the utility grids.

Furthermore, a still more complex and complicated price structure has developed, the price for the delivered energy often being related to the fulfilment of at least some of those restrictions and requirements.

This increasingly complex business environment has given rise to the need for new control methods for operating the wind power parks in order to keep the energy production stable and efficient.

It is an object of the present invention to provide a control method for a wind power park, which enables for a more cost-efficient operation of the wind power park than other methods previously known in the art.

### Brief description of the invention

The present invention relates to a method for controlling a wind power park connected to a utility grid, said wind power park comprising a plurality of wind turbines, said method comprising the steps of:
- collecting information relating to meteorological conditions at the location of the wind power park,
- estimating for each of a plurality of the wind turbines the production costs per unit energy at different load levels of the respective wind turbine taking into account the information on the present meteorological conditions and the effects on the remaining expected life time usages of different components of the respective wind turbine,
- collecting information from a utility grid operator relating to energy prices and possible requirements relating to the amount of power delivered from the wind power park to the utility grid,
- controlling the wind power park by deciding on a total amount of power to be delivered from the wind power park and distributing the decided power production between individual wind turbines taking into account the estimated production cost per unit energy and the information from the utility grid operator, and
- repeating the above steps in order to obtain a dynamic control of the wind power park.

The collection of information related to meteorological data should be understood to be performed by means of the control system being able to actively retrieve the meteorological information and/or by the meteorological information being provided to the control system, e.g. directly from measure arrangements or from external meteorological information providers.

In the same way, information related to energy prices and possible requirements relating to the amount of power delivered from the wind power park may also be actively retrieved by the control system and/or be provided to the control system, e.g. by a wind power park owner or manager, a grid operator, etc.

The information needed by the control system may be retrieved or provided directly from the source of information or the information may be retrieved or provided via databases, external (to the wind power park) control systems controlling the utility grid or meteorological information, etc.

It may not be relevant to repeat each of the steps of the above described control method for controlling a wind power park with the same frequency. As an example, it might be advantageous to repeat the steps of updating the meteorological and price information at a higher frequency than updating the estimation of the production cost per unit energy.

The repetition of the steps of the above described control method for controlling a wind power park may be initiated by changes to the information, e.g. by a certain value changing to be above or below a threshold value. Hence an increase in, for instance, wind speed, wind direction, price of energy, requirements to amount of delivered energy or back up capacity, etc. may trigger an update of information and thereby execution of one of the above mentioned steps. Hence, the time between subsequent updates of information and executions of a given step may vary.

Furthermore, it should by mentioned that the steps of the above described control method for controlling a wind power park does not necessarily have to be performed or processed in the same order as mentioned above.

The production cost per unit energy may differ between the individual wind turbines, due to the location of the wind turbine in the wind power park (located in front or in the back of a park in relation to the wind direction), time since last service, age of the wind turbine, type of the wind turbine, etc.

It is advantageous to control the wind power park according to the estimated production cost per unit energy for the individual wind turbines in the wind power park with a long term view, ideally covering the entire life time of the wind power park.

By continuously determining the amount of energy the individual wind turbines is to produce based on the production cost per unit energy and furthermore based on knowledge of the price of the produced energy, the energy is produced in the most cost efficient way.

By controlling a wind power park according to the control method as described above, it becomes possible for the control system to control the wind power park according to at least two different control strategies.

The first control strategy is to control the wind power park in order to gain as much as possible on a short term. This may be possible by controlling the wind turbine to produce as much energy as possible, i.e. to operate at the highest possible load level. This control strategy compensates the high load and thereby following shortening expected life time usage with high income from energy delivered to the utility grid.

The second control strategy is to control the wind power park in order to gain as much as possible in the long term. This may be possible by controlling the wind turbine to produce energy at a load level corresponding to a certain balance between the price per unit energy and the production cost per unit energy.

The second control strategy may be referred to as load level control strategy or, under certain circumstances, as delta control strategy. Control according to the present invention will often be referred to as load level control, i.e. controlling the wind turbines so that they produce at a given power load (amount/units of energy), even though the wind turbines could produce more. When requirements to the control of the wind power park related to holding back a delta value are given, the control strategy may be referred to as a delta control strategy. Thus, delta control refers to a control method where the production is kept a given value (delta value) below the amount of energy which is possible to produce. Delta control may be a requirement from the grid operator to be used as a tool for performing grid balance control.

The wind turbine produces electric energy, which may be referred to either in terms of energy (the most common units being kWh, MWh, etc.) or in terms of power, i.e. energy per time unit, in which case the most common units would be kW and MW.

In an embodiment of the invention, the remaining expected life time usages of the different components of the wind turbines are calculated using life time usage models for the different components under different operational conditions.

It may be advantageous to calculate or estimate the effect that control of a wind turbine according to one or more different load levels has on the remaining expected life time usage of different components of the individual wind turbines. This information may be important information to the control system of the wind power park in the determination of which percentage of the overall energy production of the entire wind power park should be produced by the individual wind turbine.

In an embodiment of the invention, the production costs per unit energy for a given wind turbine is calculated as a sum of marginal costs for a number of components of the respective wind turbine, each marginal cost being calculated as the product of a price of a component and a fraction of the lime time usage for the respective component calculated using the respective life time usage model.

It may be advantageous to know the marginal costs at least for components comprised within but not limited to a group of wind turbine components including drive train, gears (if any), pitch and yaw systems, generator, converter, blades, tower and other structures. Using the knowledge of the marginal costs for each of a plurality of wind turbine components it becomes easy to calculate the total marginal cost of this plurality of wind turbine components. Further if this plurality of wind turbine components is selected, for instance, as the most important, most expensive or most stressed components, this total marginal cost becomes the marginal cost of the wind turbine. With knowledge of the marginal cost of a wind turbine and knowledge of the units of energy produced by the wind turbine the production costs per unit energy is easy to calculate.

The marginal cost will typically increase as production increases.

In an embodiment of the invention, further input is taken into consideration when deciding on the total amount of power to be delivered from the wind power park and distributing the decided power production between the individual wind turbines, said input including for instance operational data from one or more of the wind turbines and data from a wake model for the wind power park.

It may be advantageous if the control system is provided with data from a plurality of wind turbines in the wind power park, which are controlled by the control system.

With information from a first wind turbine, such as measurements of wind speed, wind direction, etc., the control system is able to optimise the control of the neighbouring wind turbine in order to minimise the marginal cost of the components of this neighbouring wind turbine. This is also the case if the control system is provided with information, e.g. in the form of a wake model of the wind power park, lay out of the park, etc.

In an embodiment of the invention, the information relating to meteorological conditions includes information relating to one or more of the following: wind speed measurements, wind direction measurements, temperature measurements, turbulence measurements, air humidity measurements, precipitation measurements, wind speed predictions, wind direction predictions, temperature predictions, turbulence predictions, air humidity measurements and precipitation measurements.

This non-exhaustive list comprises some of the most relevant meteorological data that may be of influence when calculating the estimated production costs per unit energy for a given wind turbine in a wind power park.

In an embodiment of the invention, the operational data from one or more of the wind turbines includes one or more of the following: the present electrical power production, information on pitch angles of the blades, generator speed, rotor speed, blade loads and tower loads.

This non-exhaustive list comprises some of the most relevant operational data that may be of influence when calculating the estimated production costs per unit energy for a given wind turbine in a wind power park.

In an embodiment of the invention, the information from the utility grid operator relating to energy prices includes current prices of electrical energy in a free market and/or in a controlled market.

In order to be able to perform the most cost effective control of the wind power park it would be advantageous for the control system to have knowledge from outside the wind power park, e.g. knowledge related to the utility grid such as price per unit energy, power demands from consumers connected to the grid, etc. With this kind of information, the control system will be able compare costs (the cost of production of energy) with income (price possible to obtain by delivering energy to the utility grid) and thereby perform a cost optimised control of the wind power park.

By the expression "free market" is meant a market in which the energy price is, at least in principle, controlled by market mechanisms alone, whereas specific energy prices may be related to the fulfilment of certain delivery requirements and/or restrictions in a "controlled market".

In an embodiment of the invention, the information from the utility grid operator relating to requirements relating to the amount of power delivered from the wind power park includes minimum production requirements, maximum production requirements and/or delta control requirements.

As described above information related to the utility grid is advantageous in order to be able to control the wind power park in the most cost efficient way. Therefore, information or requirements related, for instance, to holding back potential power production and possible income from providing such back up production to the utility grid operator is also advantageous knowledge for the control system.

In an embodiment of the invention, the wake model receives input from aerodynamic models of individual wind turbines.

Taking the aerodynamic models into consideration enables for obtaining better and more accurate wake models.

The wake model mainly covers the interaction between the turbines. Input to the wake model may be aerodynamic models of the individual turbines taking into consideration the pitch angles of the blades, the rotor speeds of the wind turbines, etc. Hence the wake model is used to estimate the influence or interactions between the wind turbines on the wake.

In an embodiment of the invention, the wake model is continuously updated based on information related to actual meteorological conditions at one or more locations within or outside the wind power park.

Continuously updating the wake model is advantageous, because the wake model depends on the actual meteorological conditions at any given time.

In an embodiment of the invention, the information related to the actual meteorological conditions includes information related to wind speed, wind direction and/or turbulence.

This non-exhaustive list comprises some of the most relevant meteorological data that may be of influence when calculating a wake model for a given wind turbine in a wind power park.

In an embodiment of the invention, the step of controlling the wind power park includes deciding on the total amount of power to be delivered from the wind power park on the basis of the absolute or relative difference between the total production cost and the energy price per unit energy.

Like, different decision models may be used for deciding the amount of energy to be produced and delivered by the wind power park depending on the difference between the production costs and the energy prices, this difference may also be calculated in different ways.

In an embodiment of the invention, the step of controlling the wind power park includes distributing the decided power production between the individual wind turbines so that the total production cost per unit energy is minimised.

It may be advantageous to control the wind turbines of the wind power park individually because the production cost per unit energy produced may differ between the individual wind turbines. Hence, some wind turbines may produce energy at higher production costs per unit energy than other wind turbines. Therefore, in order to be able to perform an optimised control of the wind power plant, the wind turbines may be controlled to produce different amounts of energy and some wind turbines may even be turned off.

In an aspect of the invention, it relates to a wind power park comprising a plurality of wind turbines, said wind power park being controlled by a method as described above.

### Figures

A few exemplary embodiments of the invention will be described in more detail in the following with reference to the figures, of which
- fig. 1: illustrates schematically a part of a wind power park according to an aspect of the invention,
- fig. 2: illustrates schematically some essential features of a method according to an embodiment of the invention,
- fig. 3A: illustrates schematically some of the data flow paths related to a method according to an embodiment of the invention, and
- fig. 3B: illustrates schematically the control scheme related to a method according to an embodiment of the invention.

### Detailed description of the invention

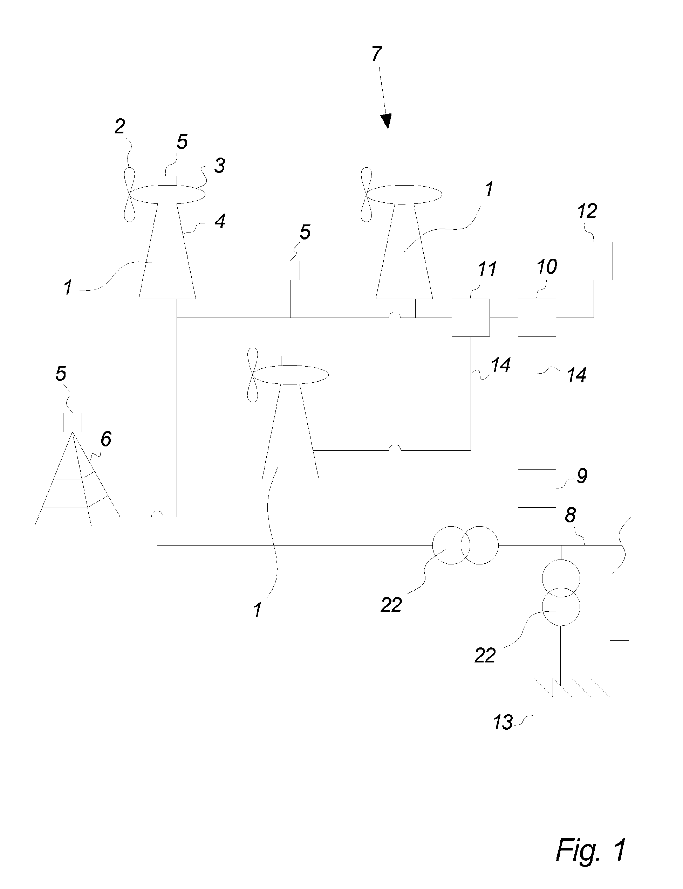

Figure 1 illustrates a part of a wind power park 7 including a plurality of wind turbines 1, meteorological measurement arrangements 5, a meteorological station 6, a control system 10, a utility grid 8, a utility grid operator 9, a wind power park owner or manager 12, a wind power park controller 11 and an energy consumer 13 connected to the utility grid 8. The wind turbines 1, the meteorological measurement arrangements 5, the meteorological station 6, the control system 10, the utility grid operator 9, the wind power park owner or manager 12 and the wind power park controller 11 are mutually connected via a data communication network 14.

The wind turbines 1 of the wind power park 7 are connected to a wind power park controller 11, which may be implemented as an integrated part of the control system 10.

The control system 10 is able to communicate with and control the wind turbines 1 so that, for instance, the amount of energy to be produced by the individual wind turbines 1 is determined by the control system 10. The communication between the wind turbines 1 and the control system 10 is a two-way communication. Hence, data may be sent from the control system 10 to the wind turbines 1 and vice versa.

The control system 10 is also able to communicate with the meteorological station 6 and the meteorological measurement arrangements 5 in order to obtain information related to the present meteorological conditions in the wind power park 7 and/or in the area surrounding it. The communication between the control system 10 and the meteorological station 6 and the meteorological measurement arrangement 5 is primarily a one-way communication to the control system 10, but the control system 10 may also actively query information related to meteorological conditions from the meteorological station 6 and the meteorological measurement arrangements 5.

Moreover, the control system 10 is able to communicate with the utility grid operator 9, whereby the control system 10 has access to information related to the utility grid 8. Information related to the utility grid 8 may, for instance, be related to. voltage, frequency and faults. Furthermore it may be related to, for instance, the price of one unit of energy, the need of energy due to large consumption, requirements to minimum or maximum production, etc.

The other way around, the utility grid operator 9 has access to information related to the wind power park 7 via the control system 10. Such information could, for instance, be related to production capacity, the actual production from the wind power park 7, back-up capacity, etc.

By having access to information is to be understood getting information either as result of a query for the relevant information or simply by being provided with updated information from another part of the communication network 14 without first sending a query for such information.

The meteorological measurement arrangement 5 may, for instance, measure wind directions, wind speeds, the humidity and/or content of salt in the air, temperatures, turbulence, etc. One or more meteorological measurement arrangements 5 may, for instance, be located directly at one or more of the wind turbines 1. In this case measurements may be used both in the control of the individual wind turbine(s) 1 and as input to the control system 10.

One or more meteorological measurement arrangements 5 may also be located at meteorological stations 6 strategically located in relation to the wind power park 7. The location of one or more meteorological stations 6 can, for instance, be in front of the wind power park 7 in relation to the predominant wind direction at the location of the wind power park 7. Output from such meteorological station 6 can, for instance, be used as input to a wake model of the wind power park 7.

Output from one or more meteorological measurement arrangement 5 or meteorological stations 6 in other locations could be used as input to various parts of the control system 10 or subsystems thereof. Hence, the wind power park controller 11, the wind turbines 1, substations (e.g. transformers 22) in relation to the wind power park 7, the control system 10, etc. could use output from meteorological measurement arrangement 5 or meteorological stations 6.

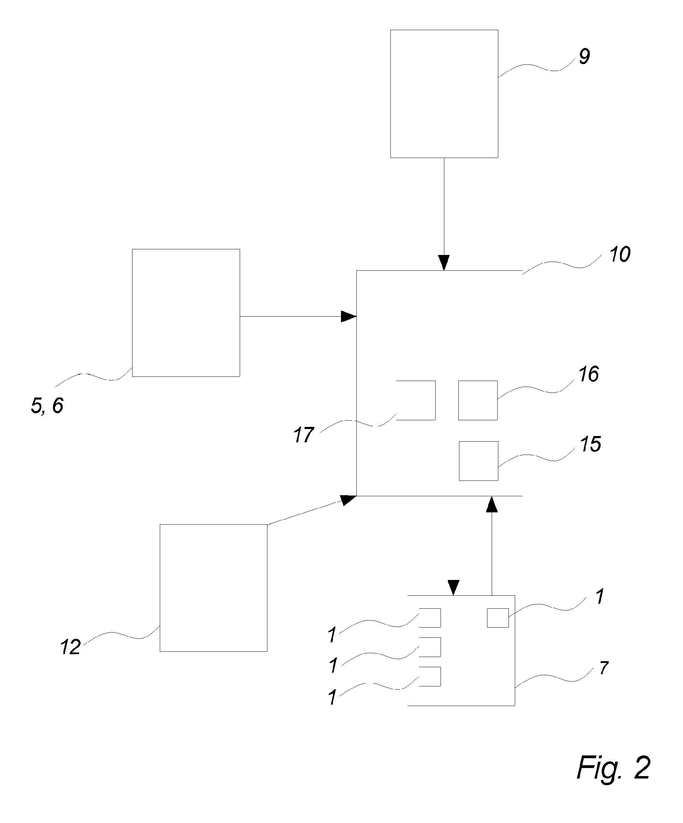

Figure 2 illustrates schematically some of the essential features of a method according to an embodiment of the invention in more detail.

Meteorological measurement arrangements 5 and meteorological stations 6 delivers information related to meteorological conditions at the location of the wind power park 7 to the wind power park control system 10. This input is relevant to the method for controlling the wind power park 7 because the environment in which the individual wind turbine 1 is located have great impact on performance, load, wear and tear, etc. on the wind turbine 1.

As an example, it could be mentioned that the higher the wind speed the greater the load the wind applies to the wind turbine 1, i.e. to the blades 2, the nacelle 3 and the tower 4. From the blades 2, this load will spread to the rest of the wind turbine 1 via the main shafts (not shown), the drive train (not shown) and the bearings and flanges (not shown) used for holding these.

Another example of relevant meteorological conditions could, for instance, be rain, which may impact aerodynamics, humidity, content of salt in the air, temperature, etc.

The meteorological conditions may be measured and transmitted "live" by measurement arrangements 5 located, for instance, at the wind turbines 1 or at meteorological stations 6, thus enabling the control system 10 of the wind power park 7 to obtain real-time information related to relevant meteorological conditions.

When a wind turbine 1 produces energy, the wind turbine components are worn and their remaining expected life time usage is reduced. As a result hereof, it is possible to calculate or estimate a production cost per unit energy for the individual wind turbine 1, the expected expenses related to the maintenance work on components and the replacement of worn out components being taken into consideration. For this calculation, a life time usage model for the respective components are used.

The production cost per unit energy is also sometimes referred to as marginal cost and may, for instance, be expressed in the terms of €/hr/kW (money/time/power).

A production cost per unit energy estimator 15 (also referred to as marginal cost estimator) is part of the control system 10. Preferably, it is implemented as an integrated part of the control system 10, but it could also be an external unit providing information to the control system 10 from a location external to the control system 10.

By the term "wind turbine components" should be understood installed components, which are responsible (directly or indirectly) for the ability of the wind turbine 1 to produce energy. In relation to the present invention, the most relevant wind turbine components or structures to be taken into account are the drive train, the gears (if any), the pitch and yaw systems, the generator, the converter and structures like blades, tower, foundation, nacelle, etc.

For each of the relevant wind turbine components, the relative reduction of the remaining expected life time usage of the component per unit time at a given load level of the operating wind turbine 1 is estimated. The production costs per unit energy for a given wind turbine 1 is calculated as a sum of marginal costs for a number of components of the respective wind turbine 1, each marginal cost being calculated as the product of the price of the component and the fraction of the life time usage corresponding to the estimated reduction in life time usage for the respective component calculated using the respective life time usage model.

The production cost per unit energy increases with the load on wind turbine 1. Hence, it is possible to estimate the production cost per unit energy at different load levels. These different load levels may be determined as a percentage of the maximum load. For instance, the production cost per unit energy can be calculated at 20%, 50%, 75%, 100% and 110% of the maximum load. The maximum load is typically defined by the wind turbine manufacturer, e.g. based on a guarantee that the wind turbine 1 is able to produce energy for 20 years if the load does not exceed the maximum load.

Depending on the load level of the wind turbine 1 and thereby the stress of the wind turbine components, the reduction of the remaining expected life time usage of the different components varies. If the wind turbine is operating constantly at a load level of 110% for a year, the remaining expected life time usage will be reduced more than if the constant load level instead were only 50%. Hence, in the latter case the expenses to maintenance or replacement of wind turbine components are lower than in the situation where the wind turbine is operated at 110%. It should be noted that this example is only given for explaining that the actual load level influences the reduction of the remaining expected life time usage and therefore is a relevant parameter in the calculation or estimation of the production cost per unit energy.

As seen from the above, the production cost per unit energy may be estimated at different load levels based on information of present meteorological conditions and a component specific model for the expected life time usage.

Based on models for meteorological conditions (primarily the wind, temperature and humidity) affecting the wind turbines 1 of the wind power park 7, for instance in form of wake models of the wind power park 7, the production cost per unit energy may be estimated theoretically. The models for meteorological conditions may be stored in a database 16 accessible by the marginal cost estimator 15.

The theoretical estimation may be made by the marginal cost estimator 15 or by other simulation programs, even when the wind power park 7 is not producing energy.

The marginal cost estimator 15 may also perform real-time estimations based on real-time operational data from the wind power park 7.

The marginal cost estimator 15 may be implemented as a data processor having access to information related to the wind turbine components and meteorological models or information, for instance from an internal database 16 and/or external database (not shown). The information related to wind turbine components may comprise prices, test results, materials, etc.

Based on information from the database 16 related to wind turbine components and theoretical meteorological models or real-time meteorological information, it is possible for the marginal cost estimator 15 to set up scenarios where the individual wind turbines 1 of the wind power park 7 are exposed to different meteorological conditions. Thereupon, the marginal cost estimator 15 can estimate the production cost per unit energy taking into account the prices and the life time usage models of the different wind turbine components,

A data processor, e.g. the marginal cost estimator 15 or a further data processor 17, may then control the wind turbines 1 of the wind power park 7 at least partly based on the production cost per unit energy.

The energy produced by wind turbines 1 in a wind power park 7 is typically delivered to a utility grid 8. In return for the delivered energy, the owner of the wind power park 12 is getting paid from the utility grid operator 9 according to the current price of energy. The price of energy varies on a daily basis, hourly basis or even sometimes from minute to minute.

Besides getting paid for the amount of delivered energy, the owner of the wind power park 12 may also be paid for holding back unexploited production capacity. Such unexploited production capacity may be used by the utility grid operator 9 as a buffer in case of changes in the utility grid conditions, e.g. an increase of energy drawn from the utility grid 8 by energy consumers 13.

Controlling a wind power park 7 by holding back such unexploited production capacity is sometimes referred to as delta control, which is a specific type of load level control. Delta control may be part of a requirement from the utility grid operator 9 to the owner or operator of the wind power park 12. For instance, the owner or operator of the wind power park 12 may be required to hold back 20% (delta value) of production capacity of the wind power park 7. In general, load level control refers to a control strategy that requires that a wind turbine 1 or wind power park 12 produces at a given power load / amount of energy, even though more it is possible to produce more.

The utility grid operator 9 is to be understood understood as the part buying the energy produced by the wind turbines 1 and controlling the operation of the utility grid 8, for instance with regard to the amount of energy available for the energy consumers connected to the utility grid 8, etc.

The requirements from the utility grid operator 9 to the owner of the wind power park 12 for operating the wind power park 7 are made available to the control system 10 either from the utility grid operator 9 or from the owner of the wind power park 12.

Furthermore, the owner of the wind power park 12 may also have additional requirements to the performance of the wind power park 7, which are also made available to the control system 10.

A data processor of the control system 10, e.g. the marginal cost estimator 15 or a further data processor 17, may then control the wind turbines 1 of the wind power park 7 at least partly based on the information/requirements from the owner of the wind power park 12 and from the utility grid operator 9.

By obtaining knowledge of the meteorological conditions, the production cost per unit energy of the individual wind turbines 1, the price paid for the delivered energy and requirements to the amount of delivered power including, for instance, requirements for delta control, an advantageous method of controlling the wind power park 7 is possible.

This advantageous method of controlling the wind power park 7 includes controlling the individual wind turbines 1 in the wind power park 7 individually. The production of the total amount of energy delivered by the wind power park 7 may be distributed between the individual wind turbines 1 according to the production cost per unit energy of the individual wind turbines 1 in such a way that the overall production cost per unit energy produced by the wind power park 7 is kept as low as possible.

Alternative, the individual wind turbines 1 are controlled according to the relationship between the overall production cost per unit energy and the price paid for the delivered energy in order for the owner of the wind power park to gain the highest instantaneous or long-term profit.

The two different above-mentioned approaches to control a wind power park 7 are only given as examples of how the mentioned available information could be used in the control of a wind power park 7. In practice, this control is carried out by data processor(s) of the control system 10.

In periods of time where the energy price is high, it might be advantages to stress the wind turbines 1, i.e. to produce energy at a high load level even though this results in increased wear and tear on wind turbine components. In periods with low energy prices, on the other hand, it might be advantageously to completely stop at least part of the wind turbines 1 in a wind power park 7 because the production cost per unit energy too high compared to the price paid per unit energy.

Because the price paid for delivering energy to the utility grid varies over time, it is advantageous to use the above mentioned control method for the wind power park dynamically. Such dynamic control is obtained by continuously updating the relevant elements, i.e. the meteorological conditions and thereby the production cost per unit energy of the individual wind turbines, the price gained by the delivered power and (if any) requirements to the amount of delivered power including, for instance, requirements for delta control.

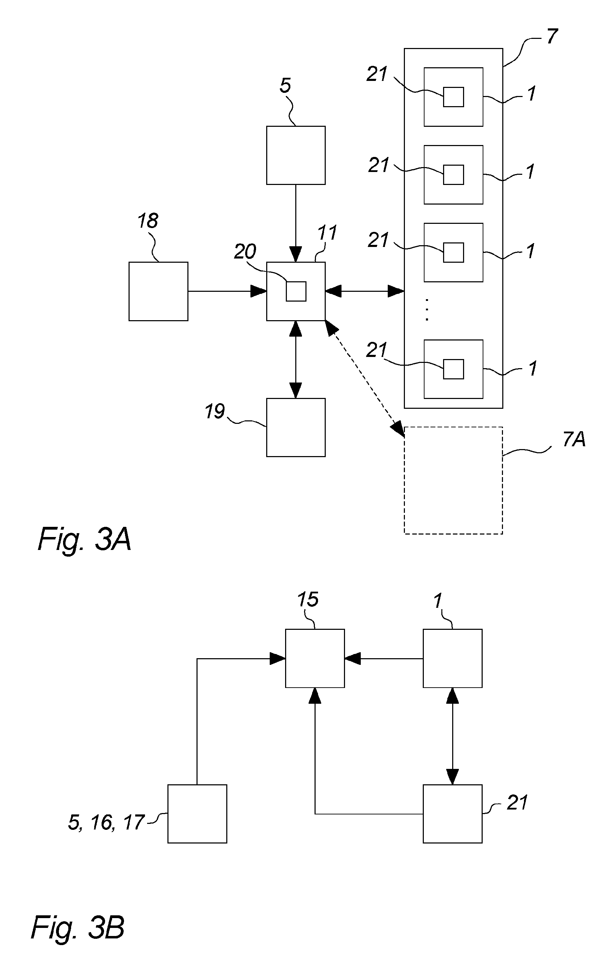

Figure 3A illustrates data flow according to an embodiment of the invention. A wind power park controller 11 (which may be an integrated part of a wind power park control system 10) communicates with wind turbines 1 of a wind power park 7, meteorological measurement arrangements 5, a provider of information relating to the electricity market 18 and an operational control 19. The wind power park controller 11 may also communicate with further wind power parks 7A as illustrated in the figure.

The wind park controller 11, in which the marginal cost based delta control / load level control can be implemented, may communicate using one or more of the following signals:
● From each of the wind turbines 1 are obtained relevant measurements like rotor and generator speeds, wind speeds, pitch angles, the amount of active and reactive power produced, etc.
● For each of the wind turbines 1, an estimation of marginal costs at different load levels are provided to the wind power park controller 11. These estimations may be computed at wind power park level as described above on the basis of measurements of key variables in the wind turbines 1 as well as on actual wind speed measurements and predictions.
● Control signals in terms of power references are provided from the wind power park controller 11 to the wind turbines 1. It should be noted that, preferably, the individual wind turbines 1 have their own respective controllers 21 for controlling the respective wind turbines 1.
● Relevant signals like wind measurements and predictions are provided from the wind power park controller 11 to the wind turbines 1.
● Energy prices (both free market prices and control market prices) are provided to the wind power park controller 11 from the electricity market information provider 18, which may be used to optimize the delta control value.
● Wind measurements from meteorological measurement arrangements 5 are provided to the wind park controller 11.
● The operational control 19 represents the wind power park owners 12 own control and should provide requirements to the control/optimization of the wind park , e.g. minimum or maximum delta control values or maximum power production, etc.
● The wind power park controller 11 provides production plans (production and delta control) based on the optimization of the wind park marginal costs in relation to the energy prices, and the actual produced power levels as well as estimated margin costs to the operational control 19.

Hence, according to this embodiment, the relevant data flow related to the wind power park controller 11 is:

Input to the wind power park controller 11:
● Wind measurements and predictions
● Energy prices for free and controlled markets
● Operator/owner requirements

Input to the wind power park controller 11 from the wind turbines 1 (e.g. provided and or calculated by the wind turbine controller 21):
● Relevant measurements
● Estimated marginal costs

Input to wind turbines 1 from the wind power park controller 11:
● Relevant measurements and wind predictions, which should be used in the estimation of marginal costs.
● Control references, which are power references reflecting the decisions made with respect to, for instance, delta control.

This data is used by an optimizer 20, which may be part of the wind power park controller 11 and/or part of the control system 10, to compute the optimal sequence of delta and normal control based on the described inputs from wind turbines 1, electricity market and owners, etc, one or more wake models for the wind power park 7 as well as production models for the wind power park 7.

The wake models reflect the wakes/interactions between the wind turbines 1 in the wind power park 7, and the production plane are used for determining the optimum level of power production given the different inputs and the output from the wake model.

The optimizer 20 may be seen as a mathematical optimization tool used to optimize the delta control values based on the different models, input data related to the wind turbines 1 and meteorological conditions, optimization requirements and restrictions given by the wind park owner 12 or by the utility grid operator 9.

According embodiments of the invention, in which the marginal cost estimator 15 is located at wind turbine level, the control scheme for the control of the wind turbine 1 is illustrated schematically in figure 3B.

The marginal cost estimator 15 uses marginal cost models of the wind turbine components, which are based on life time usages models of the wind turbine components, to estimate the marginal costs. The estimation of marginal costs is based on measurements and control signals from the wind turbine 1 combined with externally provided wind measurements and predictions. The externally provided information may come from the database 16, data processor 17, meteorological measurement arrangements 5, etc.

As explained above, the marginal cost estimator 15 computes the marginal cost based on models of the life time usage for a number of given operational conditions for the different components of the wind turbine. The production cost per unit energy is subsequently computed as sum of (life time usage fraction of component) * (price of component) for all relevant components of the respective wind turbine 1.

The control of the power produced by the wind power park 7 may include delta control, which is to be understood as reserving a part of the available power output for power system services (backup power). The delta part, e.g. 20% of the rated capacity, is determined by the utility grid manager 9 or the owner of the wind power park 12 for use in situations where power is needed in the utility grid 8 to secure that the utility grid 8 is stable. Power from wind power plants 7 is the perfect backup power for the utility grid 8 because it is possible to control the power production (e.g. change the produced power with for instance 20 %) within a few seconds, whereas fossil fuel plants typically need minutes to respond.

When the owner of the wind power plant 12 is aware of the marginal cost of the production at the individual wind turbines 1, it is possible to distribute or adapt the power references to the individual wind turbines 1 in order to obtain optimal operation of the total wind power portfolio. Hence, the production at the most expensive turbines will typically be lowered, leading to an optimization of the production of the wind power park 7 as a whole.

Contrary to this, delta control is normally carried out by reducing the power production equally on all of the wind turbines 1 within the wind power park 7.

If the owner of the wind power park 12 is able to control other energy plants, e.g. fossil fuel plants or other renewable power plants, and also knows the marginal cost of one or more of these other types of power plants, the owner of the wind power plant 12 is able to choose the most profitable way of producing power including, for instance, delta control when required or economically attractive.

It should be emphasized that the scope of the present invention is not restricted to the description above, which represents a few exemplary and illustrative embodiments only, whereas the scope of the invention is defined by the following claims.

### List of reference numbers

1. Wind turbine
2. Wind turbine blade
3. Nacelle
4. Wind turbine tower
5. Meteorological measurement arrangement
6. Meteorological station
7. Wind power park
8. Utility grid
9. Utility grid operator
10. Wind power park control system
11. Wind power park controller
12. Wind power park owner or manager
13. Energy consumer
14. Data communication network
15. Marginal cost estimator
16. Database
17. Further data processor
18. Electricity market information provider
19. Operational control
20. Optimizer
21. Wind turbine controller
22. Transformer

## Claims

1. A method for controlling a wind power park (7) connected to a utility grid (8), said wind power park comprising a plurality of wind turbines (1), said method comprising the steps of:
- collecting information relating to meteorological conditions at the location of the wind power park,
- estimating for each of a plurality of the wind turbines the production costs per unit energy at different load levels of the respective wind turbine taking into account the information on the present meteorological conditions and the effects on the remaining expected life time usages of different components of the respective wind turbine,
- collecting information from a utility grid operator (9) relating to energy prices and possible requirements relating to the amount of power delivered from the wind power park to the utility grid,
- controlling the wind power park by deciding on a total amount of power to be delivered from the wind power park and distributing the decided power production between individual wind turbines taking into account the estimated production cost per unit energy and the information from the utility grid operator, and
- repeating the above steps in order to obtain a dynamic control of the wind power park.

2. A method according to claim 1, wherein the remaining expected life time usages of the different components of the wind turbines are calculated using life time usage models for the different components under different operational conditions.

3. A method according to claim 2, wherein the production costs per unit energy for a given wind turbine is calculated as a sum of marginal costs for a number of components of the respective wind turbine, each marginal cost being calculated as the product of a price of a component and a fraction of the lime time usage for the respective component calculated using the respective life time usage model.

4. A method according to any of the preceding claims, wherein further input is taken into consideration when deciding on the total amount of power to be delivered from the wind power park and distributing the decided power production between the individual wind turbines, said input including for instance operational data from one or more of the wind turbines and data from a wake model for the wind power park.

5. Method according to any of the preceding claims, wherein the information relating to meteorological conditions includes information relating to one or more of the following: wind speed measurements, wind direction measurements, temperature measurements, turbulence measurements, air humidity measurements, precipitation measurements, wind speed predictions, wind direction predictions, temperature predictions, turbulence predictions, air humidity measurements and precipitation measurements.

6. Method according to claim 4 or 5, wherein the operational data from one or more of the wind turbines includes one or more of the following: the present electrical power production, information on pitch angles of the blades, generator speed, rotor speed, blade loads and tower loads.

7. Method according to any of the preceding claims, wherein the information from the utility grid operator relating to energy prices includes current prices of electrical energy in a free market and/or in a controlled market.

8. Method according to any of the preceding claims, wherein the information from the utility grid operator relating to requirements relating to the amount of power delivered from the wind power park includes minimum production requirements, maximum production requirements and/or delta control requirements.

9. Method according to any of claims 4 to 8, wherein the wake model receives input from aerodynamic models of individual wind turbines.

10. Method according to any of claims 4 to 9, wherein the wake model is continuously updated based on information related to actual meteorological conditions at one or more locations within or outside the wind power park.

11. Method according to claim 10, wherein the information related to the actual meteorological conditions includes information related to wind speed, wind direction and/or turbulence.

12. Method according to any of the preceding claims, wherein the step of controlling the wind power park includes deciding on the total amount of power to be delivered from the wind power park on the basis of the absolute or relative difference between the total production cost and the energy price per unit energy.

13. Method according to any of the preceding claims, wherein the step of controlling the wind power park includes distributing the decided power production between the individual wind turbines so that the total production cost per unit energy is minimised.

14. A wind power park (7) comprising a plurality of wind turbines (1), said wind power park being controlled by a method according to any of claims 1-13.
